Europäisches Patentamt

European Patent Office

Office européen des brevets

(11) Publication number: **0 267 034 B1**

# EUROPEAN PATENT SPECIFICATION

(45) Date of publication of patent specification: **22.07.92** (51) Int. Cl.⁵: **C09K 17/00**

(21) Application number: **87309794.3**

(22) Date of filing: **05.11.87**

The file contains technical information submitted after the application was filed and not included in this specification

(54) **Protection of beaches and sand dunes against erosion.**

(30) Priority: **07.11.86 US 928427**

(43) Date of publication of application:
**11.05.88 Bulletin 88/19**

(45) Publication of the grant of the patent:
**22.07.92 Bulletin 92/30**

(84) Designated Contracting States:
**AT BE CH DE ES FR GB GR IT LI LU NL SE**

(56) References cited:
**EP-A- 134 106          DE-A- 2 028 328**
**US-A- 2 801 933        US-A- 3 079 332**
**US-A- 3 301 848        US-A- 3 743 613**
**US-A- 4 582 452**

(73) Proprietor: **PFIZER INC.**
**235 East 42nd Street**
**New York, N.Y. 10017(US)**

(72) Inventor: **Auerbach , Michael H.**
**2, Foot Court**
**Waterford Connecticut(US)**
Inventor: **Borden, George W.**
**7, David Drive**
**Niantic Connecticut(US)**

(74) Representative: **Bradbrook, Geoffrey William et al**
**PFIZER LIMITED Ramsgate Road**
**Sandwich Kent, CT13 9NJ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to processes and compositions for the protection of sand dunes against erosion.

Continued shoreline erosion due to the destructive actions of wind and waves presents a serious and growing problem in many coastal areas. During periods of on-shore storms, recreational beaches are damaged or lost, thousands of private homes, condominiums and resorts are threatened and damages due to erosion amount to millions of dollars. Current solutions to this problem include the construction of sea walls or rock revetments and replenishment of lost sand. The above methods are costly and the erection of permanent structures such as revetments disturbs the natural beauty and aesthetic appeal of the beaches.

Another method of controlling erosion is through the use of artificial seaweed. This method, disclosed, for example, in United States Patent No. 4,490,071 issued December 25, 1984 to Morrisroe, also entails the construction of an unnatural permanent structure which detracts from the overall appearance of the beach.

DE-A-2028328, EP-A-0134106, US-A-2801933, US-A-4582452, US-A-3743613 and US-A-3079332 relate to polymeric materials used to stabilise soils forming substantially level surfaces, such as foundations of roads, or for underground injection as in oilfields.

There remains a need for an efficient method for the protection of beaches against erosion which does not require the construction of a permanent structure and which retains the natural appearance of the shoreline.

The present invention is directed to a process for consolidation of sand dunes subject to erosion, comprising (a) forming a mixture of from 65 to 85 parts by weight of sand particles, from 0.5 to 10 parts by weight of a water-soluble gel-forming compound and from 0.05 to 2.0 parts by weight of a water-soluble cross-linking agent for said gel-forming compound, with the balance fresh or sea water based on 100 parts by weight of the mixture, and (b) gunning the composite so formed on to the dune.

Preferred gel-forming compounds are polymers such as polymers produced by bacteria of the genus Xanthomonas, polymers produced by bacteria of the genera Agrobacterium and Pseudomonas, polymers produced by bacteria of the genus Sclerotium, carboxymethylcellulose, hydroxyethylcarboxymethylcellulose, polyacrylamides, aminomethylated polyacrylamides, guar gums, polyvinyl alcohols, and derivatives thereof.

Preferred crosslinking agents for the above polymers are polyvalent metal cross-linking agents such as aluminum (III), tin (IV), chromium (III), antimony (V), titanium (IV), zirconium (IV), and boron (III). An especially preferred gel-forming composition is formed by cross-linking carboxymethylcellulose with aluminum (III). Other preferred cross-linking agents are chromium (III) and titanium (IV).

Other preferred gel-forming compounds are phenol, and derivatives thereof, including, but not limited to, resorcinol, catechol and hydroquinone.

Preferred cross-linking agents for phenol, and derivatives thereof, are aldehydes and dialdehydes of from one to six carbon atoms. Preferred aldehydes include formaldehyde, acetaldehyde, propionaldehyde, glutaraldehyde, glyoxal, furfural, etc. Preferably, the phenol/aldehyde gel-forming composition is used at an amount ranging from about 0.30 to about 6 parts, by weight, of the composite.

Another gel-forming/cross-linking agent combination which can be used in the present invention is polyacrylamide cross-linked with glyoxal.

In one embodiment, the aqueous gel-forming compound is a polymer produced by bacteria of the genus Xanthomonas and the cross-linking agent is a galactomannan. Preferred galactomannans are guar gum and locust bean gum, and derivatives thereof.

In the process of the present invention, the placement, thickness and configuration of the composite is adapted to the degree of repair necessitated by the surface erosion of the sandy soil, or the degree of consolidation needed by the sandy soil. Preferably, the placement of the composite is adapted at an angle sufficient to dissipate the erosive effects attributable to wave energy, wind energy, or combinations thereof.

FIG. 1 depicts an apparatus for carrying out water impact testing of gel-forming composition/sand composites.

FIG. 2 depicts a wave tank in which wave testing of the gel-forming composition/sand composites was carried out.

According to the present invention, sandy dunes subject to surface erosion are consolidated by contacting sand particles with an aqueous gel-forming composition to form a composite and the resulting composite is applied to the surface which needs to be protected.

The aqueous gel-forming composition is formed by combining a suitable water-soluble gel-forming compound with an effective amount of a suitable water-soluble cross-linking agent for said compound in aqueous media.

One preferred group of gel-forming compounds are water-soluble polymers. The water-soluble polymer employed in the present invention can be any water-soluble polymer. Examples of such polymers include polymers produced by bacteria of the genus Xanthomonas, polymers produced by bacteria of the genera Agrobacterium and Pseudomonas, polymers produced by bacteria of the genus Sclerotium, carboxymethylcellulose, hydroxyethylcarboxymethylcellulose, polyacrylamides, polyvinyl alcohols, aminomethylated polyacrylamides, guar gums and derivatives thereof.

Polymers produced by bacteria of the genus Xanthomonas are commonly referred to as Xanthan gums, or Xanthans. The Xanthans used in the process of the present invention include the commercially available forms such as FLOCON$^R$ Biopolymer 4800 (Pfizer Inc.). Also of interest are polysaccharide broth preparations prepared by the methods disclosed in United States Patent Nos. 3,301,848 and 4,296,203, the disclosures on which are incorporated herein by reference. Xanthan gum is a complex polysaccharide having a molecular weight of over one million with a cellulose-like backbone composed of repeating B-D-(1,4)glucose units, with acetyl mannose, glucuronic acid, and mannose partially modified with pyruvate ketal groups in side chains attached B-D-(1-3) to each alternate backbone glucose unit. Xanthan derivatives can also be employed as where the Xanthan is partially de-acetylated and/or partially depyruvated.

Polymers produced by bacteria of the genus Agrobacterium and Pseudomonas correspond to those heteropolysaccharides documented in the prior art as succinoglycan, succinoglucan, succinoglycan-like polymers and succinoglucan-like polymers, all hereinafter referred to as succinoglycans. Succinoglycans are heteropolysaccharides comprised of galactose and for each mole of galactose, 6.0-9.0 moles of glucose. These succinoglycans are substituted by acidic functional groups imparting a net negative charge to the heteropolysaccharide. The heteropolysaccharide additionally contains variable proportions of acid residues such as pyruvate, succinate and acetate. Preferred succinoglycans are those produced by bacteria of the genera Agrobacterium and Pseudomonas. Especially preferred succinoglycans are those produced by the species Agrobacterium radiobacter and Agrobacterium tumefaciens.

Polymers produced by bacteria of the genus Sclerotium are known as scleroglucans or poly-(glucosylglucans). The nonionic polymer has a molecular weight which ranges from 500,000 to over 6,000,000 and consists of a linear chain of anhydroglucose units linked beta one to three. Thirty to thirty five percent of the linear chain units bear single appended anhydroglucose units linked beta one to six. A satisfactory scleroglucan for the process of the present invention is Actigum CS-11 TM (CECA, S.A. Paris, France).

Other preferred polymers include carboxymethylcellulose, hydroxyethylcarboxymethylcellulose, guar gums, polyacrylamides, aminomethylated polyacrylamides, polyvinyl alcohols, and derivatives thereof. These polymers are all commercially available and methods for preparing derivatives of these polymers are also well known.

The cross-linking agents employed in the embodiment of the present invention wherein water-soluble polymers are used to form the aqueous gel-forming composition are preferably polyvalent metal cations. These polyvalent metal cations are selected from metals in groups III to VIII of the Periodic Table of the elements. In the present invention, preferred polyvalent metal cations are aluminum (III), tin (IV), chromium (III), antimony (V), titanium (IV), boron (III), and zirconium (IV).

The metal cations are used in the form of water-soluble compounds yielding polyvalent cations on dissolution. Examples of these compounds include aluminum chloride, aluminum sulfate, chromium chloride or other chromium (III) compounds such as VOLAN$^R$, (E.I. Dupont de Nemours Co. Wilmington, Delaware), ferric chloride, aluminum acetate, aluminum dibasic acetate, sodium aluminate, aluminum chlorohydrate, stannic chloride, antimony compounds (SBE-168, Amspec, Gloucester, N.J.), titanium compounds (TYZOR$^R$AA, E.I. Dupont de Nemours Co.), zirconium compounds (ZIRTECH$^R$AA Zirtech, Inc., Gainesville, Fla.) zirconium oxychloride, sodium borate, and sodium tetraborate.

Metal compounds which can also be used in the practice of the present invention are water-soluble compounds of polyvalent metals wherein the metal is present in a valence state which is capable of being reduced to a lower polyvalent valence state. Examples of such compounds include ammonium chromate, ammonium dichromate, the alkali metal chromates and the alkali metal dichromates. The above listed metal compounds are encompassed by the term "polyvalent metal cation". Combinations of two or more polyvalent metal cations, e.g., chromium and aluminum, chromium, aluminum and zirconium, can also be used.

Another class of gel-forming compounds which can be used in the present invention are phenols, and derivatives thereof. Exemplary phenols include phenol, resorcinol, catechol, and hydroquinone, and derivatives thereof.

Preferred cross-linking agents for the above phenols are suitable aldehydes and dialdehydes of from one to six carbon atoms. Examples of such aldehydes include formaldehyde, acetaldehyde, propionaldehyde, glutaraldehyde, furfural, glyoxal, and the like.

Since it is preferred to use an aqueous gel-forming composition in the processes and compositions of the present invention, it is necessary to control the concentrations of phenolic compound and aldehyde or dialdehyde cross-linking agent so as to obtain a gel-forming composition, rather than the conventional phenol/formaldehyde resins. Thus, if a phenol/aldehyde combination is used as the aqueous gel-forming composition, the concentrations of each should be within the limits 0.30 to 6 weight percent of the total composition. Preferably, the phenolic compound and aldehyde or dialdehyde should be combined at a pH of from about 5.0 to about 10.0.

Another preferred aqueous gel-forming composition useful in the present invention can be formed by combining a polyacrylamide with a suitable aldehyde or dialdehyde of from one to six carbon atoms. Especially preferred is the resultant aqueous gel-forming composition formed by combining polyacrylamide with glyoxal.

Another preferred aqueous gel-forming composition is formed by cross-linking polymers produced by bacteria of the genus Xanthomonas with a galactomannan. Galactomannans are comprised of linear mannose units with galactopyranose units attached to the linear chain. The ratio of galactose to mannose units varies from 1:3 to 1:6. Preferred galactomannans include guar gum and locust bean gum.

Guar gum is derived from the seed of the guar plant, Cyanopsis tetragonolobus. The commercially available gum is substantially pure endosperm from that seed. The pure gum can be used in the process or composition of the present invention; however derivatives such as oxidized guar gum, carboxyethylated guar gums and hydroxyalkylated guar gums can also be used. The hydroxyalkyl guar gum derivatives include hydroxyethyl and hydroxypropylguar.

Locust bean gum is derived from the seeds of the tree Ceratonia siligua, or the carob tree. The carob, an evergreen that grows to 10 meters, produces pods 10-20 cm long and 2-5 cm wide. Pods are taken from the trees and are transported to kibbling machines where the pods are broken open and the beans freed. The beans are soaked in water and then milled to remove the shell, release the germ and free the endosperm for later grinding and sifting. The ground endosperm, milled as free of protein as possible, is the commercial gum of industry. Derivatives of locust bean gum such as hydroxyalkyl locust bean gum and phosphated locust bean gums can also be used in the present invention.

The aqueous gel-forming composition used in the process of the present invention is formed by combining a suitable gel-forming compound with an effective amount of a suitable cross-linking agent in aqueous media. The gel-forming compound or gel-forming compound and cross-linking agent can be combined as dry ingredients mixed with the sand which is subsequently slurried with aqueous media during emplacement, or fed as separate solutions in the aqueous media. In the present invention, the aqueous media can be sea water, fresh water or other aqueous media derived from the water source near the sandy soil to be stabilized. In the process of the present invention wherein a polymer/polyvalent metal cross-linking agent combination is used to form the aqueous gel-forming composition, the polymer is present in an amount ranging from 0.5 to 10 parts by weight and the polyvalent metal cross-linking agent is present in an amount ranging from 0.05 to 2 parts by weight, based on 100 parts of the composite.

In the present specification and claims the term "sandy dunes subject to surface erosion" encompasses sandy dunes in proximity to a source of water which exerts an erosive effect either singly or in combination with wind, on the sandy dunes. Such sand dunes may be found by lakes, oceans, rivers, streams and quarries. The term "surface erosion" encompasses wind, water and wave erosive effects but does not encompass subterranean erosive effects such as high temperatures or natural gas pressure, conditions likely to exist in oil wells.

It has surprisingly been found that the contacting of sand particles with the aqueous gel-forming composition is accomplished most efficiently by using gunning techniques, for example, commercial gunite techniques. This enables the sand particles and aqueous gel-forming composition to be contacted almost simultaneously with gel formation so that the sand particles are uniformly dispersed throughout the gel-forming composition. This results in the composite having the appearance of natural sand. Thus, when the composite formed is applied to the sandy soil, the overall natural beauty of the beach is maintained. As a gelled composite, the agglomerated sand particles are resistant to the erosive effects of wind and water.

In another embodiment of the present invention, a substantially surface erosion resistant composition is formed by contacting sand particles with an aqueous gel-forming composition. The aqueous gel-forming composition is formed by combining any of the previously described gel-forming compounds with any of the previously described cross-linking agents or by combining the gel-forming compound with aqueous media. In the composition of the present invention, the sand particles are present in an amount ranging from about 65 to about 85 parts by weight, the gel-forming compound is present in an amount ranging from about 0.5 to about 10 parts by weight and the cross-linking agent is present in an amount ranging from about 0.05 to about 2.0 parts by weight of the total composite with the balance being aqueous medium.

Conditions for forming a phenol/aldehyde or dialdehyde/sand composition are similar to those discussed in the process of the present invention.

The compositions of the present invention are especially useful for application to beach surfaces and dune faces wherein erosion has seriously reduced the actual beach size or undercut the dune structure. Compatible sand from another location can be contacted with the aqueous gel-forming composition of the present invention to form a composite and this composite can then be applied to the surface of the beach or dune.

Another surprising advantage to the process of the present invention is that the composite, particularly when it is applied using gunning techniques, can be placed and configured so as to adapt to the degree of repair necessary due to the surface erosion. For instance, if most of the surface erosion has taken place at the toe (base) of the, for example, sand dune, the composite can be emplaced into the toe at a determined thickness and then applied at varying thickness along the scarp of the dune so as to minimize further erosive effects of wind and water. Similarly, the compositions of the present invention can be placed at an angle sufficient to dissipate erosive energy due to wind, water, and wave action, and combinations thereof.

Having described the invention in general terms, reference is now made to specific examples. It is to be understood that these examples are not to be construed as limiting the invention, the scope of which is determined by the appended claims.

EXAMPLE 1

Samples were prepared for water impact testing in the following manner. 500g of a sand/gel composite were prepared in a one liter steel beaker by rapidly mixing in sequence: (a) to simulate liquid feed: 370g sand, 100g of aqueous polymer solution (containing the correct amount of the polymer desired) and 30g of aqeuous crosslinker solution (containing the appropriate amount of crosslinker desired); and (b) to simulate dry blend: 370g of sand drymixed with corresponding amounts of polymer and crosslinker and 130g water.

Each sand/gel blend was placed into a tared impact test cell, the surface was smoothed over and the sand/gel composite was dried for 3-5 days.

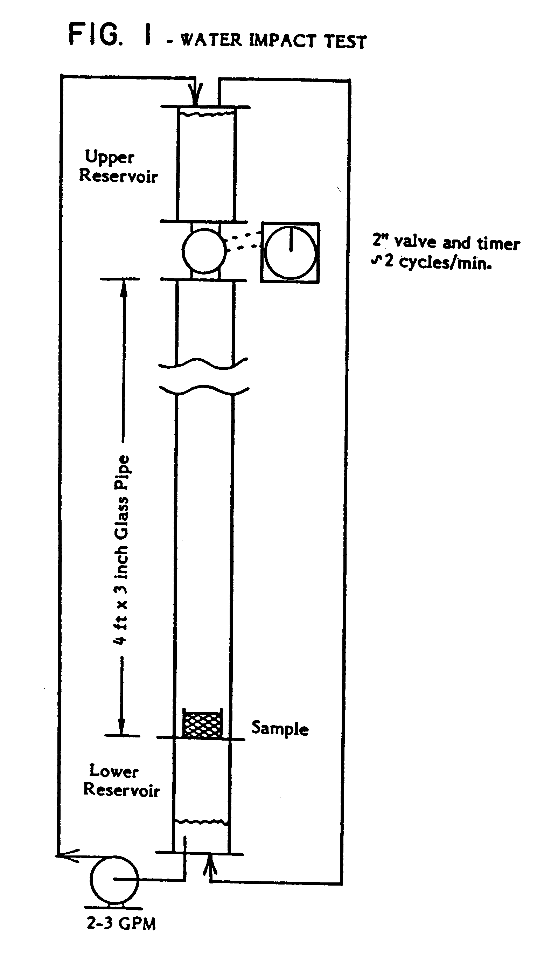

The filled cell was weighed and installed into the test apparatus (Figure 1). The water was recirculated at the rate of 6 liters/min at a 30 second dump cycle for four hours or until composite disintegration.

The test specimen was then drained and dried for 3 days. After drying, the sample was reweighed and weight loss was determined as % weight loss/hour. A loss of 0.5%/hour was considered optimal.

The results are summarized in Table 1, being the same whether mixing sequence (a) or (b) was used.

<u>TABLE 1</u>

SAND DUNE STABILIZATION-WATER IMPACT TESTING

| 120 cycles/hr<br>COMPOSITE | T=Tap Water<br>Wt % Polymer | S=Seawater<br>% Loss/Hr |
|---|---|---|
| untreated Sand | ----- | 100 |
| Sand/Xanthan[5]/Al(III)[4] | 0.5 T | 9.0 |
| | 1.0 T | 4.1 |
| | 1.5 T | 0.29 |
| | 2.0 T | 0.04 |
| Sand/Carboxymethyl-<br>cellulose[1]/Al (III)[4] | 0.5 T | 0.66 |
| | 1.0 T | 0.40 |
| | 1.5 T | 0.35 |
| | 2.0 T | 0.31 |
| Sand/Carboxymethyl-<br>cellulose[2]/Al (III)[4] | 1.5 T | 0.38 |
| | 2.0 T | 0.28 |
| | 2.0 S | 0.34 |
| | 2.65 S | 0.27 |
| | 4.0 S | 0.28 |
| | 6.0 S | 0.24 |
| | 8.0 T | 0.21 |
| Sand/Carboxymethyl-<br>cellulose[3]/Al (III)[4] | 0.5 T | 100 |
| | 1.0 T | 0.06 |
| | 1.5 T | 0.18 |
| | 2.0 T | 0.11 |
| Sand/Resorcinol/<br>Formaldehyde | 2.5 T | 4.0 |
| | 4 T | 0.6 |

| 120 cycles/hr COMPOSITE | T=Tap Water Wt % Polymer | S=Seawater % Loss/Hr |
|---|---|---|
| Sand/Polyvinyl/ Alcohol/Borate[6] | 2T | 28 |
| | 4T | 23 |
| | 6S | 5.9 |
| | 8S | 4.2 |
| Sand/Guar/Borate[6] | 3S | 100 |
| | 4S | 67 |

1.    As 100% carboxymethylcellulose (7H, Hercules Inc. Wilmington, DE.)

2.    As 65% carboxymethylcellulose (D-65, Carbose Corp., Somerset, PA)

3.    As 72% carboxymethylcellulose (D-72, Carbose Corp., Somerset, PA.)

4.    As $Al(OH)_2OAc-1/3\ H_3BO_3$ (Niacet Corp., Niagara Falls, N.Y.)

5.    FLOCON Biopolymer 4800

6.    Sodium borate

EXAMPLE 2

Three $0.028m^3$ (61 x 46 x 10cm) 1-cu ft (24"x18"x4") rectangular wooden pans were filled with about 45kg (100 lb) each of sand/gel composite blend with a commercial gunite spray system. The ingredients were emplaced as 1) dry 420-149 micron (40-100 mesh) washed hydroclassified kiln-dried beach sand fed at 45kg/min (100 lb)/min from a star valve metering device; 2) a 14.4% aluminium dibasic acetate solution, consisting of 13.7% aluminium chloride, 8.5% sodium acetate, 2.1% boric acid, and 17.2% sodium carbonate, fed at 2.66 kg/min (5.85 lb)/min through a 9.5mm (3/8") full cone wide angle spray nozzle into the sand hose directly after the Reed mixer; and 3) a 11% Carbose D-65 (65% sodium carboxymethylcellulose, Carbose Corp., Somerset, PA) solution fed at 13kg/min (28.5 lb)/min through a 3.2mm (0.125") orifice ring at the gunite nozzle. This gave a composition containing 74.4% sand, 1.52% active CMC polymer, 0.12% aluminium, and 21.9% water.

The composite surface was smoothed and the pans were allowed to air-dry indoors for 5-7 days. After this period, numerous surface cracks were present, but the material was firm and resilient. The pans were then mounted at a 45 degree angle on a private beach in Groton, CT, at the mid-tide position from March to September. Tides were such that the pans were totally submerged twice a day for several hours. In addition to the tides, the composites in the pans were exposed to mild wave impacts of up to one foot high, abrasive scouring by beach gravel and rocks, and multiple impacts by floating driftwood.

After 150 days, one of the composites was virtually unchanged with no evidence of erosion. The other two composites had a few driftwood gouges at various spots; one had no erosion around the gouges, while the other showed some layered sloughing at the top edge where a deep gouge had occurred. All three composites showed light to moderate discolouration due to algae growth on the surface, but this growth appeared to have no effect on surface integrity or strength.

EXAMPLE 3

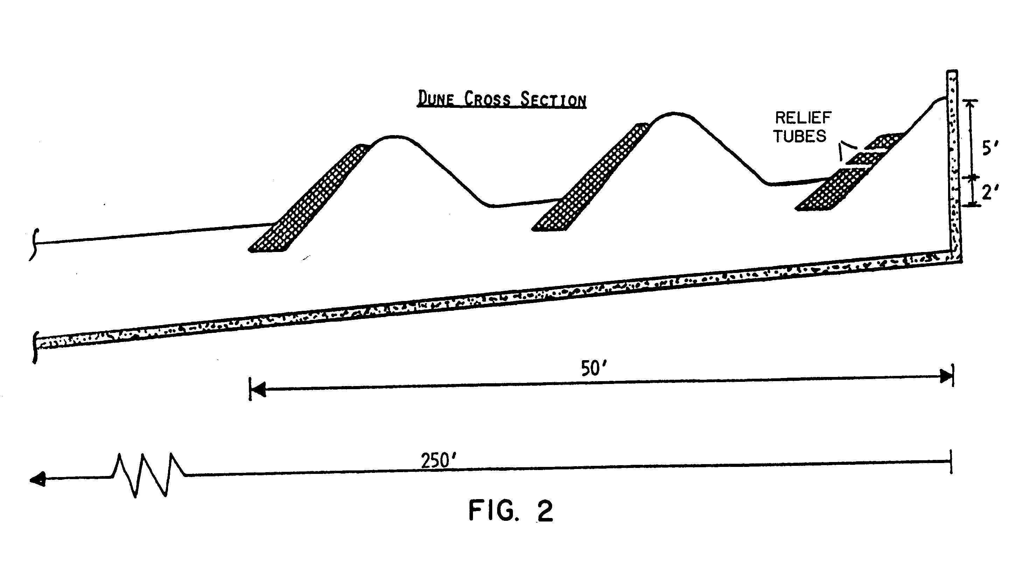

Three triangular 2.5m (8-ft) high sand dunes were constructed atop a 1:12 sloping coarse sand base inside a 3.6m (12-ft) wide x 5.4m (18-ft) deep x 107m (350-ft) long wavetank at the Oregon State University Wave Research Facility, Corvallis, OR. The front surfaces of the dunes were compacted by tamping with a heavy flat tool and covered with a nonwoven polypropylene fiber geotextile (FIBERTEX[R]), Crown-Zellerbach, Washougal, WA.) to prevent sand blowing. Sloping sand/gel composites of about 0.34-0.42m$^3$/0.3m (12-15 cu ft/linear ft) were then applied using commercial gunite spray equipment modified with a proportionally-driven star valve sand feeder above a Reed Mixer Co. compressed air gun (Figure 2). The sprayed composites were covered with polyethylene sheeting for 16 hours to allow complete hydration of the polymer, and then uncovered for 3-7 days for airdry curing. The wave tank was then filled with water to the dune toe level and the composites were impacted with monochromatic and Brettschneider random waves of 76-152cm (2.5-5 feet) heights, 2-13 second period, for 4-7 hours. These conditions simulate peak East Coast winter storm intensity. After wave testing of each frontmost dune/composite was completed, the material was removed from the tank with a clamshell/crane and the sloping sand surface in front of the next dune/composite was smoothed and reseasoned with gentle waves.

Specific compositions, application details, and test results are given below.

Composite A

Composition/Emplacement: 1) Dry 420-149 micron (40-100 mesh) washed hydroclassified kiln-dried beach sand fed at 68kg (150 lb)/min from the star valve hopper; 2) a 16% aluminium dibasic acetate solution, consisting of 15/1% aluminium chloride, 9.3% sodium acetate, 2.3% boric acid, and 5.4% ammonium hydroxide, fed at 7.2kg (15.8 lb)/min through a 9.5mm (3/8") full cone wide angle spray nozzle into the 5cm (2") sand hose about 1.8m (six feet) past the Reed mixer; and 3) a 10% Carbose D-72, (72% sodium carboxymethylcellulose, Carbose Corp., Somerset, PA) solution fed at 25.5kg (56 lb)/min through a 3.2mm (0.125") orifice ring at the gunite nozzle. This gave a composition containing 68.2% sand, 1.72% active CMC polymer, 0.166% aluminium, and 26.9% water. Total cure time before wave testing was 8 days.

Dimensions: 152cm (five feet) high, 76cm (2.5 feet) thick at base, 45cm (1.5 feet) thick at top, 370cm (12 feet) wide, 1:1 slope, with two rows of 15 cm (six-inch) diameter cardboard relief tubes oriented horizontally and spaced 60cm (two feet) apart and 60cm (two feet) and 107cm (3.5 feet) above the base. Numerous small surface cracks were present before the test.

Test Results: During the four-hour test duration, monochromatic waves of 60-150cm (2-5 ft) height, 3.5-13 sec period, and 2.1-2.4m (7-8 ft)/sec velocity were generated and impacted the composite. The sand/gravel beach material was churned up and hurled violently against the dune up to three feet above the toe, with waves overtopping the composite frequently. There was virtually no damage to the composite after the test; no change in shape or size of the surface cracks was seen, and no loss of material around the drain tubes was evident.

Composite B

Composition/Emplacement: 1) Dry mix of 95.2% 420-149 micron 40-100 mesh washed hydroclassified kiln-dried beach sand, 2.66% Carbose D-72 (NaCMC), and 2.14% Niaproof aluminium dibasic acetate (Niacet Corp., Niagara Falls, NY) fed at 91kg (200 lb)/min from the star valve hopper; 2) fresh water fed at 1.8kg (4.0 lb)/min through a 9.5cm (3/8") full cone wide angle spray nozzle into the sand hose about ten feet before the gunite nozzle; 3) a 3.2% Carbose D-72 solution fed at 28kg (62 lb)/min through a 1.5mm (0.060") orifice ring at the gunite nozzle. This gave a composition containing 72% sand, 1.88% active CMC polymer, 0.26% aluminium, and 23.7% water. Total cure time before wave testing was 6 days.

Dimensions: 2.1m (seven feet) high, 75cm (2.5 feet) thick at base, 30cm (1.0 feet) thick at top, 3.6m (12 feet) wide, 1:1 slope. Subsurface structural defects were suspected because of several shutdowns/restarts during emplacement, but the surface appeared smooth and firm with no appreciable cracks.

Test Results: During the 6.7 hour test duration, monochromatic and Brettschneider random waves of 60-150cm (2-5 ft) height, 2-16 sec duration, and 2.3m (7.7 ft)/sec velocity were generated and impacted the composite. Gravel and stones from the beach material accreted some two feet above the toe and were hurled violently against the composite face, causing come 2.5-5cm (1-2") of erosion along the gravel line. A 11.4cm (4.5") thick x 81cm (32") wide crescent-shaped chunk fell off after 3.5 hours at the site of the subsurface emplacement defect noted above. No further signs of wear were noted after the test.

Composite C

Composition/Emplacement: 1) Dry mix of 96.2% 420-149 micron (40-100 mesh) washed hydroclassified kiln-dried beach sand, 2.8% Carbose D-72 (NaCMC), and 1.0% sodium aluminate fed at 91kg (200 lb)/min from the star valve hopper; 2) fresh water fed at 3.6kg (8.0 lb)/min through a 9.5mm (3/8") full cone wide angle spray nozzle into the sand hose about ten feet before the gunite nozzle; 3) a solution containing 1.9% Carbose D-72, 3.9% acetic acid, and 0.62% boric acid fed at 30kg (63.7 lb)/min through a 1.5mm (0.060") orifice ring at the gunite nozzle. This gave a composition containing 70.8% sand, 1.74 % active CMC polymer, 0.24% aluminium, and 24.8% water. Total cure time before wave testing was 4 days.

Dimensions: Same as Composite B. No defects were noted and the surface appeared smooth and resilient without cracks.

Test Results: During the four-hour test duration, monochromatic and Brettschneider random waves of 60-75cm (2.0-2.5 ft) height, 5-10 sec period, and 2.3m (7.7 ft)/sec velocity were generated and impacted the composite. Within two hours a thin 6.3mm (1/4") surface skin had sloughed off the composite face, but no further erosion was noted after test completion.

Control Dune 4

Composition/Emplacement/Dimensions: About 9m$^3$ (12 cubic yards) of coarse concrete sand was dumped into the tank and shaped into a triangular 2.4m (8-ft) high sand dune with a 1:1 sloping front surface. The front surface was compacted by tamping and the dune was soaked with a gentle water spray.

Test Results: Eight-second period waves of about 75cm (2.5 ft) height were generated and impacted the dune. Within 1.5 minutes, a major fissure developed and the dune slumped downward. Some 25% of the material washed away within 3 minutes, 50% within 7.5 minutes, 80% within 22 minutes, and the dune was completely gone after 45 minutes.

**Claims**

1.  A process for consolidation of sand dunes subject to erosion, comprising (a) forming a mixture of from 65 to 85 parts by weight of sand particles, from 0.5 to 10 parts by weight of a water-soluble gel-forming compound and from 0.05 to 2.0 parts by weight of a water-soluble cross-linking agent for said gel-forming compound, with the balance fresh or sea water based on 100 parts by weight of the mixture, and (b) gunning the composite so formed on to the dune.

2.  A process according to claim 1 wherein said gel-forming compound is a water-soluble polymer and said cross-linking agent is a polyvalent metal cation.

3.  A process according to claim 2 wherein said water-soluble polymer is selected from the group consisting of carboxymethylcellulose, polymers produced by bacteria of the genus Xanthomonas, polymers produced by bacteria of the genera Agrobacterium and Pseudomonas, polymers produced by bacteria of the genus Sclerotium, hydroxyethylcarboxymethylcellulose, polyacrylamides, polyvinyl alcohols, aminomethylated polyacrylamides, guar gums, and derivatives thereof, and said cross linking agent is selected from the group consisting of aluminium (III), tin (IV), chromium (III), antimony (V), titanium (IV), boron (III), and zirconium (IV).

4.  A process according to claim 3 wherein said polymer is carboxymethylcellulose and said cross-linking agent is aluminium (III).

5.  A process according to claim 1 wherein said gel-forming compound is a phenol and said cross-linking agent is an aldehyde or dialdehyde of from 1 to 6 carbon atoms.

6.  A process according to claim 1 wherein said aqueous gel-forming compound is a polymer produced by bacteria of the genus Xanthomonas and said cross-linking agent is a galactomannan.

7.  A process according to claim 6 wherein said galactomannan is guar gum.

8.  A process according to any preceding claim wherein said mixture is applied to said sandy soil at an angle sufficient to dissipate erosive energy due to wind, water and wave action, and combinations thereof.

9

**Revendications**

1. Procédé de consolidation de dunes de sable soumises à une érosion, consistant (a) à former un mélange de 65 à 85 parties en poids de particules de sable, de 0,5 à 10 parties en poids d'un composé hydrosoluble formant un gel et de 0,05 à 2,0 parties en poids d'un agent hydrosoluble de réticulation destiné audit composé formant un gel, le reste étant constitué d'eau douce ou d'eau de mer sur la base de 100 parties en poids du mélange, et (b) à projeter sur la dune le composite ainsi formé.

2. Procédé suivant la revendication 1, dans lequel le composé formant un gel est un polymère hydrosoluble et l'agent de réticulation est un cation métallique polyvalent.

3. Procédé suivant la revendication 2, dans lequel le polymère hydrosoluble est choisi dans le groupe comprenant la carboxyméthylcellulose, des polymères produits par des bactéries du genre Xanthomonas, des polymères produits par des bactéries des genres Agrobacterium et Pseudomonas, des polymères produits par des bactéries du genre Sclerotium, l'hydroxyéthylcarboxyméthylcellulose, des polyacrylamides, des polymères d'alcool vinylique, des polyacrylamides aminométhylés, des gommes guar, et leurs dérivés, et l'agent de réticulation est choisi dans le groupe comprenant l'aluminium (III), l'étain (IV), le chrome (III), l'antimoine (V), le titane (IV), le bore (III) et le zirconium (IV).

4. Procédé suivant la revendication 3, dans lequel le polymère est la carboxyméthylcellulose et l'agent de réticulation est l'aluminium (III).

5. Procédé suivant la revendication 1, dans lequel le composé formant un gel est un phénol et l'agent de réticulation est un aldéhyde ou dialdéhyde ayant 1 à 6 atomes de carbone.

6. Procédé suivant la revendication 1, dans lequel le composé formant un gel aqueux est un polymère produit par des bactéries du genre Xanthomonas et l'agent de réticulation est un galactomannane.

7. Procédé suivant la revendication 6, dans lequel le galactomannane est la gomme guar.

8. Procédé suivant l'une quelconque des revendications précédentes, dans lequel le mélange est appliqué au sol sablonneux à un angle suffisant pour dissiper l'énergie érosive due à l'action du vent, de l'eau et des vagues, ainsi que leurs associations.

**Patentansprüche**

1. Verfahren zum Verdichten von Erosion ausgesetzten Sanddünen umfassend (a) das Herstellen einer Mischung aus 65 bis 85 Gew.Teilen Sandteilchen, 0,5 bis 10 Gew.Teilen einer wasserlöslichen gelbildenden Verbindung und 0,05 bis 2,0 Gew.Teilen eines wasserlöslichen Vernetzungsmittels für die gelbildende Verbindung, Rest frisches Wasser oder Meerwasser, bezogen auf 100 Gew.Teile der Mischung, und (b) das Spritzen des so gebildeten Composits auf die Düne.

2. Verfahren nach Anspruch 1, in dem die gelbildende Verbindung ein wasserlösliches Polymer ist und das Vernetzungsmittel ein mehrwertiges Metallkation ist.

3. Verfahren nach Anspruch 2, in dem das wasserlösliche Polymer ausgewählt ist aus der Gruppe bestehend aus Carboxymethylzellulose, durch Bakterien der Gattung Xanthomonas produzierten Polymeren, durch Bakterien der Gattungen Agrobacterium und Pseudomonas produzierten Polymeren, durch Bakterien der Gattung Sclerotium produzierten Polymeren, Hydroxyäthylcarboxymethylzellulose, Polyacrylamiden, Polyvinylalkoholen, aminomethylierten Polyacrylamiden, Guargummen und Derivaten hievon und das Vernetzungsmittel ausgewählt ist aus der Gruppe bestehend aus Aluminium(III), Zinn-(IV), Chrom(III), Antimon(V), Titan(IV), Bor(III) und Zirkon(IV).

4. Verfahren nach Anspruch 3, in dem das Polymer Carboxymethylzellulose und das Vernetzungsmittel Aluminium(III) ist.

5. Verfahren nach Anspruch 1, in dem die gelbildende Verbindung ein Phenol ist und das Vernetzungsmittel ein Aldehyd oder Dialdehyd mit 1 bis 6 Kohlenstoffatomen ist.

6.  Verfahren nach Anspruch 1, in dem die wässerige gelbildende Verbindung ein durch Bakterien der Gattung Xanthomonas produziertes Polymer ist und das Vernetzungsmittel ein Galactomannan ist.

7.  Verfahren nach Anspruch 6, in dem das Galactomannan Guargummi ist.

8.  Verfahren nach einem vorhergehenden Anspruch, in dem die Mischung auf den Sandboden in einem Winkel aufgebracht wird, der ausreichend ist, erosive Energie auf Grund der Wirkung von Wind, Wasser und Wellen und Kombinationen hievon zunichtezumachen.

# FIG. 1 - WATER IMPACT TEST

FIG. 1 - WATER IMPACT TEST

Upper Reservoir

2" valve and timer ∿2 cycles/min.

4 ft x 3 inch Glass Pipe

Sample

Lower Reservoir

2-3 GPM

DUNE CROSS SECTION

RELIEF TUBES

5'

2'

50'

250'

FIG. 2

EP 0 267 034 B1